# EUROPÄISCHE PATENTSCHRIFT

(11) **EP 2 161 141 B1**
(45) Veröffentlichungstag und Bekanntmachung des Hinweises auf die Patenterteilung: **06.11.2013**
(21) Anmeldenummer: 09010815.0
(22) Anmeldetag: 24.08.2009
(51) Int. Cl.: B60B 7/01, B60B 7/06, B60B 7/12, B60B 7/04

(54) **Schutzvorrichtung für Flanken von Reifen von Fahrzeugen**
Protective device for flanks of vehicle tyres
Dispositif de protection pour des flancs de pneus de véhicules

(30) Priorität: 05.09.2008 DE 102008046568
(43) Veröffentlichungstag der Anmeldung: 10.03.2010
(73) Patentinhaber: Erlau AG, 73431 Aalen (DE)
(72) Erfinder: Rieger, Hansjörg, 73431 Aalen (DE); Rieger, Johannes, Werner, 73447 Oberkochen (DE); Zvonimir, Bogdan, 73453 Abtsgmünd (DE)
(74) Vertreter: Jackisch-Kohl, Anna-Katharina

(56) Entgegenhaltungen:
- WO-A-2008/092185
- AU-B2- 580 434
- DE-T2- 69 905 800
- US-A- 2 488 864
- US-A- 5 531 508

## Beschreibung

Die Erfindung betrifft eine Schutzvorrichtung für Flanken von Reifen von Fahrzeugen nach dem Oberbegriff des Anspruchs 1.

Gattungsbildende Schutzvorrichtungen sind z. B. aus der WO 2008/09 2185 bekannt. Bei dieser bekannten Schutzvorrichtung sind die Schutzelemente mit einem Ende an einem mehrteiligen, in Axialrichtung nicht verstellbaren Ring befestigt, der im Querschnitt etwa T-förmig ausgebildet ist.

Je nach Untergrund, über den Fahrzeuge fahren, werden die Reifenflanken einem erheblichen Verschleiß ausgesetzt. Der Untergrund kann Geröll, Steine, Schrott, Schlacke oder dergleichen aufweisen, die zu einer erheblichen Beanspruchung der Reifenflanken führen. Solche ungünstigen Bedingungen treten beispielsweise auf Mulden auf, auf denen Nutzfahrzeuge, wie zum Beispiel Muldenkipper, fahren. In solchen Einsatzbereichen werden die Reifenflanken innerhalb kurzer Zeit beschädigt oder weisen solche Schnittverletzungen auf, dass die Reifen ausgewechselt werden müssen. Zum Schutz der Reifen sind Reifenschutzketten bekannt, die jedoch für solche Einsatzzwecke zu aufwändig sind. Zudem haben Reifenschutzketten ein sehr hohes Gewicht, sind teuer und lassen sich nur sehr umständlich montieren und demontieren. Reifenschutzketten sind zudem für Fahrzeuge ungeeignet, die mit höheren Geschwindigkeiten, z.B. 50 km/h, fahren bzw. längere Wegstrecken zurücklegen. In diesen Fällen verschleißen die Reifenschutzketten verhältnismäßig rasch. Reifenschutzketten führen auch zu einem höheren Kraftstoffverbrauch, weil die Reifen beim Überrollen der Kettenglieder sich stark verformen (Walkarbeit) und dadurch eine höhere Antriebsleistung erforderlich ist. Auch das hohe Gewicht der Reifenschutzkette trägt zum höheren Kraftstoffverbrauch bei.

Der Erfindung liegt die Aufgabe zugrunde, die gattungsgemäße Schutzvorrichtung so auszubilden, dass sie bei einfacher und kostengünstiger Herstellung sowie einfacher Montage einen optimalen Schutz der Reifenflanken gewährleistet, dabei nur wenig verschleißt und zu einem geringeren Kraftstoffverbrauch des Fahrzeuges führt.

Diese Aufgabe wird bei der gattungsgemäßen Schutzvorrichtung erfindungsgemäß mit den kennzeichnenden Merkmalen des Anspruches 1 gelöst.

Bei der erfindungsgemäßen Schutzvorrichtung werden die Schutzelemente durch formstabile, unter Belastung elastisch verformbare Teile gebildet. Sie erstrecken sich von der Halterung aus etwa radial, in Achsrichtung des Reifens gesehen. Die Schutzelemente schützen im Unterschied zu Reifenschutzketten nicht den gesamten Reifen, sondern nur den gefährdeten Bereich der Reifenflanken. Die Schutzvorrichtung hat somit nur ein geringes Gewicht, lässt sich einfach montieren und insbesondere kostengünstig fertigen. Da die Schutzelemente formstabil sind, nehmen sie in einer Ausgangslage, in der sie nicht unter Belastung stehen, eine vorgegebene Lage relativ zur zu schützenden Reifenflanke ein. Fährt das Fahrzeug mit den Reifen über im Untergrund befindliche Gegenstände, können die Schutzelemente durch elastische Verformung nachgeben, so dass sie durch diese Gegenstände selbst nicht beschädigt werden. Dennoch wird durch die Schutzelemente gewährleistet, dass die Reifenflanke geschützt bleibt. Sollten Gegenstände zwischen die Schutzvorrichtung und die Reifenflanke gelangen, werden diese aufgrund der elastischen Verformung der Schutzelemente innerhalb eines kurzen Fahrweges wieder nach außen bewegt, so dass diese Gegenstände weder die Reifenflanke noch die Schutzelemente bzw. die gesamte Schutzvorrichtung beschädigen. Die erfindungsgemäße Schutzvorrichtung ist hervorragend für Fahrzeuge geeignet, die mit höheren Geschwindigkeiten, zum Beispiel 50 km/h, fahren bzw. größere Wegstrecken zurücklegen. Die Schutzvorrichtung verschleißt nur wenig. Da sie vom Reifen nicht überfahren wird, kann der Kraftstoffverbrauch des Fahrzeuges, auf dessen Reifen die Schutzvorrichtungen aufgezogen sind, klein gehalten werden. Hierzu trägt insbesondere auch das geringe Gewicht der Schutzvorrichtung bei.

Die Schutzelemente haben Abstand von der Reifenflanke. Dies hat den Vorteil, dass die Schutzelemente nicht ständig an der Reifenflanke reiben und damit zu einem frühzeitigen Verschleiß der Reifenflanke führen.

Eine einfache Befestigung der Schutzelemente ergibt sich, wenn sie mit einem Ende auf einem Ring der Halterung befestigt sind, mit der die Schutzvorrichtung am Reifen befestigt wird. Damit dieser Ring nur wenig Raum in Anspruch nimmt, ist er als flache Ringscheibe ausgebildet. Die Ringscheibe liegt in einer etwa parallel zur Reifenflanke sich erstreckenden Ebene. Dann steht die Ringscheibe nur wenig über den Reifen vor, so dass die Gefahr einer Beschädigung der Ringscheibe sowie der auf ihr befestigten Schutzelemente gering ist. Damit die Schutzvorrichtung an unterschiedlich breite Reifen einfach angepasst werden kann, lässt sich der Ring in Achsrichtung des Reifens verstellen.

Vorteilhaft erstrecken sich die Schutzelemente über die gesamte radiale Breite der Reifenflanke, so dass diese vollständig geschützt ist,

Vorteilhaft liegt der Ring, quer zur Reifenachse gesehen, im Bereich neben der Reifenflanke. Hierbei kann der Ring an der Außenseite neben der Reifenflanke liegen. Es ist aber auch möglich, insbesondere wenn das Fahrzeugrad bzw. die Felge einen größeren Durchmesser haben, dass der Ring, quer zur Reifenachse gesehen, innerhalb der Reifen- bzw. Felgenöffnung liegt.

Da der Reifen über die Felge übersteht, ist es auch möglich, dass der Ring, quer zur Reifenachse gesehen, in der Ebene der Reifenflanke liegt. Dann steht der Ring nicht über die Reifenflanke nach außen vor.

Um eine einfache Montage der Schutzvorrichtung zu gewährleisten, ist der Ring vorteilhaft mit quer von ihm abstehenden Steckteilen versehen, die in Aufnahmen eingesetzt werden.

Diese Aufnahmen sind vorzugsweise Hülsen, die vorteilhaft an einem Kupplungsstück der Halterung vorgesehen sind. Durch eine solche Ausbildung lässt sich die Schutzvorrichtung einfach montieren und demontieren, da zunächst das Kupplungsstück montiert wird und erst anschließend der Ring mit den Schutzelementen mittels der Steckteile in die Aufnahme des Kupplungsstückes eingesetzt wird. Um wenig Bauraum zu beanspruchen, erstrecken sich die Aufnahmen vorteilhaft parallel zur Reifenachse.

Eine einfache Montage der Schutzvorrichtung ergibt sich, wenn das Kupplungsstück als Ring ausgebildet ist.

Damit die Schutzvorrichtung an unterschiedlich große Reifen montiert werden kann, lässt sich der Durchmesser dieses Ringes vorteilhaft einstellen. Dadurch kann die erfindungsgemäße Schutzvorrichtung für im Durchmesser unterschiedlich große Reifen bzw. Felgen eingesetzt werden.

Der Ring besteht vorteilhaft aus wenigstens zwei teilkreisförmigen Ringteilen, die lösbar miteinander verbunden sind. Dabei sind die Ringe vorteilhaft durch wenigstens eine Schraube miteinander verbunden.

Mit der Schraube lässt sich sehr einfach der Abstand zwischen den Ringteilen und damit der Durchmesser des Kupplungsstückes einstellen.

Das Kupplungsstück kann als einteiliger Spannring ausgebildet sein. Mit ihm lässt sich das Kupplungsstück vorteilhaft in der Felge des Fahrzeugrades befestigen. Die Enden des einteiligen Spannringes sind vorteilhaft durch wenigstens ein Spannelement miteinander verbunden, mit dem der Spannring gegen die Innenseite der Felge verspannt werden kann.

Die Schutzelemente sind vorteilhaft zumindest teilweise Schraubfedern. Sie sind einfach und kostengünstig herzustellende Bauteile, die zudem eine einfache Befestigung an der Halterung ermöglichen.

Diese einfache Befestigung wird erleichtert, wenn die Schraubfedern über wenigstens eine Achse mit dem Ring der Halterung verbunden sind.

Die Achse greift in ein Ende der Schraubfeder ein, die auf der Achse einfach befestigt werden kann.

Die Achse ragt vorteilhaft radial nach außen über den Ring, so dass sie der Schraubfeder eine ausreichende Formstabilität gibt.

Die Schraubfeder selbst überragt vorteilhaft die Achse über den größten Teil ihrer Länge. Dadurch ist gewährleistet, dass die Schraubfeder im Belastungsfall in allen Richtungen flexibel ausweichen kann.

Die Schraubfeder kann über ihre Länge konstanten, aber auch unterschiedlichen Durchmesser haben. Dadurch lässt sich über die Formgestaltung der Feder die Schutzvorrichtung an den jeweiligen Einsatzfall anpassen.

Die Schraubfeder kann kegelförmig ausgebildet sein. Hierbei kann die Schraubfeder so angeordnet sein, dass sich ihr Durchmesser radial nach außen oder nach innen vergrößert.

Damit die Reifenflanke über ihren gesamten Umfang optimal geschützt ist, sind die Schutzelemente über den Umfang der Halterung vorteilhaft gleichmäßig verteilt angeordnet.

Ist der Abstand zwischen benachbarten Schutzelementen entsprechend groß, dann wird zwischen benachbarten Schutzelementen jeweils wenigstens ein Zwischenelement angeordnet, das den Bereich der Reifenflanke zwischen den Schutzelementen schützt.

Das Zwischenelement kann durch ein Kettennetz gebildet sein, das eine hohe Festigkeit und auch Verschleißfestigkeit aufweist.

Da im Einsatz der Fahrzeuge in der Regel der radial äußere Bereich der Reifenflanken stärker beansprucht wird als der radial innere Bereich, kann das Kettennetz vorteilhaft radial innen weitmaschiger sein als radial außen.

Es ist aber selbstverständlich auch möglich, dass das Kettennetz gleich große Kettenmaschen aufweist, so dass über die gesamte radiale Breite die Reifenflanke optimal geschützt wird.

Das Kettennetz kann mit radial innen liegenden Kettensträngen am radial inneren Ende der Schutzelemente befestigt werden. Liegen die Angriffspunkte der Kettenstränge an diametral einander gegenüberliegenden Stellen der Schutzelemente, werden diese in einer etwa parallel zu der die Reifenflanke enthaltenden Ebene gehalten.

Greifen die Kettenstränge radial weiter innen oder radial weiter außen an, dann wirkt auf die Schutzelemente eine Kraft in Richtung auf die Reifenflanke oder entgegengesetzt zu ihr. Dies hat zur Folge, dass die Schutzelemente von ihrer Halterung aus in Richtung auf die Reifenflanke oder weg von der Reifenflanke sich erstrecken.

Das Zwischenelement zwischen benachbarten Schutzelementen kann auch durch ein Gewebe gebildet sein.

Wenn das Gewebe vorteilhaft mit Maschenöffnungen versehen ist, können zwischen die Schutzvorrichtung und die Reifenflanke gelangende Gegenstände durch die Maschenöffnungen rasch nach außen fallen.

Auf Zwischenelemente kann dann verzichtet werden, wenn der Abstand zwischen benachbarten Schutzelementen kleiner ist als deren Querschnittsbreite. Dann liegen benachbarte Schutzelemente mit einem so geringen Abstand voneinander, dass Gegenstände im Untergrund nicht zwischen den Schutzelementen hindurch an die Reifenflanke gelangen können.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in Explosivdarstellung eine erste Ausführungsform einer erfindungsgemäßen Schutzvorrichtung,
- Fig. 2: in perspektivischer Darstellung einen Teil einer in einer Felge montierten Halterung der Schutzvorrichtung gemäß Fig. 1,
- Fig. 3: eine Draufsicht auf den Reifen gemäß Fig. 2,
- Fig. 4: in perspektivischer Darstellung einen Teil der Halterung der erfindungsgemäßen Schutzvorrichtung,
- Fig. 5: eine Seitenansicht der Halterung gemäß Fig. 4,
- Fig. 6: eine Draufsicht auf einen Reifen, in dessen Felge die Halterung gemäß den Fig. 4 und 5 eingesetzt ist,
- Fig. 7: einen Draufsicht auf den Reifen gemäß Fig. 6,
- Fig. 8: in perspektivischer Darstellung die am Reifen montierte Schutzvorrichtung,
- Fig. 9: in Seitenansicht die am Reifen montierte Schutzvorrichtung gemäß Fig. 8,
- Fig. 10: eine Draufsicht auf den Reifen mit montierter Schutzvorrichtung gemäß Fig. 9,
- Fig. 11: in schematischer Darstellung und in Ansicht zwischen Schutzelementen der Schutzvorrichtung sich befindende Zwischenelemente, die ebenfalls dem Schutz der Reifenflanke dienen,
- Fig. 12: ein Ausführungsbeispiel für ein Zwischenelement der erfindungsgemäßen Schutzvorrichtung,
- Fig. 13: in vergrößerter Darstellung das Zwischenelement gemäß Fig. 12,
- Fig. 14 bis Fig. 20: jeweils in Darstellungen entsprechend Fig. 13 weitere Ausführungsformen von Zwischenelementen,
- Fig. 21: in schematischer Darstellung und in Seitenansicht eine Lage der Schutzvorrichtung am Reifen,
- Fig. 22: die Anbindung der Zwischenelemente an ein Schutzelement der erfindungsgemäßen Schutzvorrichtung,
- Fig. 23 und Fig. 24: in Darstellungen entsprechend den Fig. 21 und 22 eine weitere Möglichkeit der Lage der Schutzvorrichtung bezüglich des Reifens,
- Fig. 25: in Seitenansicht einen Teil einer weiteren Ausführungsform einer erfindungsgemäßen Schutzvorrichtung,
- Fig. 26 und Fig. 27: jeweils in Darstellungen entsprechend Fig. 25 weitere Ausführungsformen von erfindungsgemäßen Schutzvorrichtungen.

Die Schutzvorrichtung dient dazu, die Reifenflanken gegen Beschädigung und/oder Schnittverletzungen durch Gegenstände, wie Geröll, Steine, Schrott, Schlacke und dergleichen zu schützen. Dabei ist die Schutzvorrichtung so ausgebildet, dass sie nicht ständigen Kontakt mit der Reifenflanke hat. Dadurch werden sowohl die Reifenflanke als auch die Schutzvorrichtung gegen frühzeitigen Verschleiß geschützt. Wie im Folgenden anhand verschiedener Ausführungsbeispiele noch im Einzelnen erläutert werden wird, kann die Schutzvorrichtung wahlweise am Reifen angebaut oder abgebaut werden. Dadurch muss die Schutzvorrichtung nur dann am Reifen montiert werden, wenn Gefahr für die Reifenflanken besteht. Die Schutzvorrichtung ist darüber hinaus vorteilhaft so gestaltet, dass sie mit der Fahrbahn bzw. dem Untergrund keinen Kontakt hat, so dass die Fahrbahn durch die Schutzvorrichtung auch nicht beschädigt wird. Die Bauteile der Schutzvorrichtung sind so gestaltet und angeordnet, dass sie nur in einem kritischen Fall ihre Funktion erfüllen, im Übrigen jedoch auf den Reifen bzw. die Reifenflanke keinen Druck ausüben.

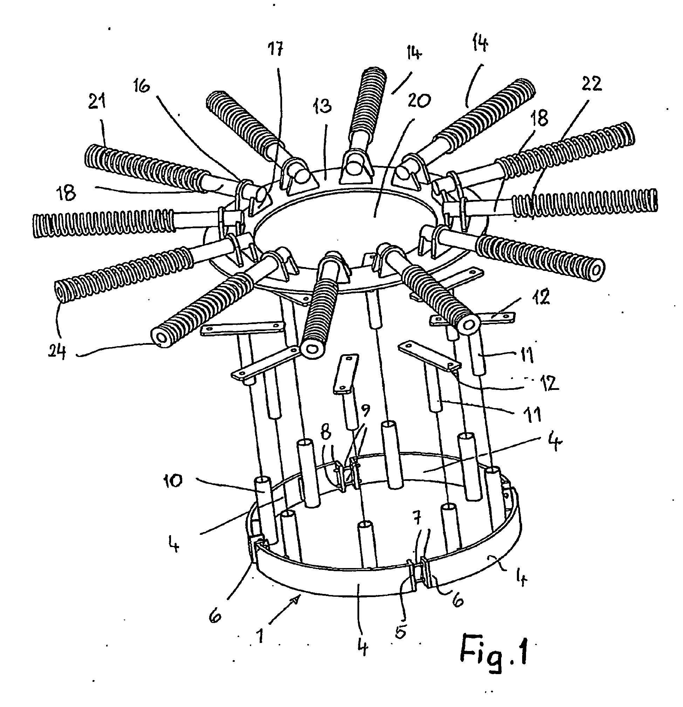

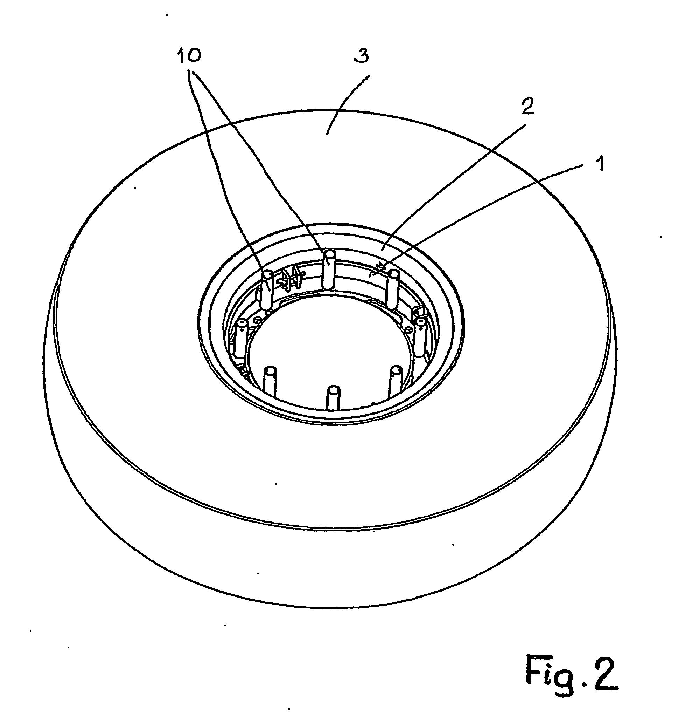

Die Schutzvorrichtung hat ein ringförmiges Kupplungsstück 1, mit dem sie in einer Felge 2 eines zu schützenden Reifens 3 lösbar befestigt werden kann (Fig. 1 und 2). Das Kupplungsstück 1, das Teil einer Halterung der Schutzvorrichtung ist, ist vorzugsweise ein kreisförmiger Ring, dessen Außendurchmesser zur Anpassung an den Innendurchmesser der Felge 2 eingestellt werden kann. Im Ausführungsbeispiel besteht hierzu das Kupplungsstück 1 aus vier Kupplungsteilen 4, die vorteilhaft gleich lang sind und deren Enden radial nach innen gerichtete Laschen 5, 6 aufweisen. Benachbarte Kupplungsteile 4 sind durch jeweils wenigstens eine Verbindungsschraube 7, vorzugsweise zwei Verbindungsschrauben 7, miteinander verbunden, die durch die Laschen 5, 6 benachbarter Kupplungsteile 4 ragen. Auf den Verbindungsschrauben 7 sitzen an den einander zugewandten Seiten der Laschen 5, 6 Muttern 8, 9, die den Abstand zwischen den benachbarten Kupplungsteilen 4 sicherstellen. Mit den Verbindungsschrauben 7 können die Kupplungsteile 4 stufenlos gegeneinander verstellt werden. Dadurch ist es problemlos möglich, das Kupplungsstück 1 exakt an den Innendurchmesser der Felge 2 anzupassen. Wie Fig. 2 zeigt, liegt das ringförmige Kupplungsstück 1 mit den Außenseiten seiner teilkreisförmigen Kupplungsteile 4 an der Felgeninnenseite an. Mit den Verbindungsschrauben 7 können die teilkreisförmigen Kupplungsteile 4 optimal an die Innenseite der Felge 2 mit Vorspannung angelegt werden. Da die Kupplungsteile 4 aus schmalen, hochkant stehenden teilkreisförmigen Elementen bestehen, nimmt das Kupplungsstück 1 in der Felge 2 nur wenig Raum in Anspruch.

An der Innenseite der Kupplungsteile 4 sind jeweils zwei Hülsen 10 befestigt, die vorteilhaft an die Kupplungsteile 4 angeschweißt sind. Die Hülsen 10 sind über den Umfang des Kupplungsstückes 1 gleichmäßig verteilt angeordnet und gleich ausgebildet. Ihr in Fig. 1 unteres Ende liegt in Höhe des unteren Randes der Kupplungsteile 4, während sie über den anderen Längsrand der Kupplungsteile 4 überstehen. Wie Fig. 2 zeigt, sind die Hülsen nur so lang, dass sie bei montiertem Kupplungsstück 1 nicht über die Felge 2 überstehen.

Die Hülsen 10 dienen zur Aufnahme von Steckteilen 11, die axial verstellbar in die Hülsen 10 eingesetzt werden können. Dadurch ist es möglich, die Steckteile 11 in den Hülsen 10 genau zu positionieren. Da die Steckteile 11 unabhängig voneinander in die zugehörigen Hülsen 10 eingesetzt werden, kann die Montage der Schutzvorrichtung am Reifen 3 optimal so vorgenommen werden, dass die Schutzvorrichtung die für die Schutzfunktion des Reifens 3 notwendige Lage positionsgenau einnimmt. Um die Axialverstellbarkeit der Steckteile 11 bezüglich der Hülsen 10 zu erreichen, können die Steckteile 11 beispielsweise als Gewindeteile ausgebildet sein, die in die Hülsen 10 geschraubt werden.

Bei einer anderen (nicht dargestellten) Ausführungsform können die Steckteile 11 begrenzt beweglich gegenüber den Hülsen 10 gelagert sein. Die Hülsen 10 können beispielsweise eine längliche Öffnung aufweisen, durch die ein fest mit dem Steckteil 11 verbundener Stift ragt. In der Hülse 10 ist wenigstens eine Druckfeder, wie eine Schrauben- oder Tellerfeder, untergebracht, durch welche der Steckteil 11 axial nach außen belastet wird. Normalerweise liegt der Stift des Steckteiles 11 am oberen Rand der Hülsenöffnung an. Bei Belastung des Steckteiles 11 im Einsatz der Schutzvorrichtung kann der Steckteil 11 gegen die Federkraft in die Hülse 10 geschoben werden. Dadurch wird eine Beschädigung des Steckteiles 11 bzw. der Hülse 10 bzw. der mit ihm verbundenen Bauteile verhindert.

Die Druckfeder kann auch außerhalb der Hülse 10 angeordnet sein und beispielsweise den Steckteil 11 umgeben. Die Druckfeder stützt sich in diesem Fall am oberen Ende der Hülse 10 und an einem auf dem Steckteil 11 befestigten Anschlag ab.

Die Steckteile 11 sind an einem Ende mit jeweils einer quer abstehenden Lasche 12 versehen. Die Steckteile 11 schließen beispielsweise in halber Länge an die Laschen 12 an.

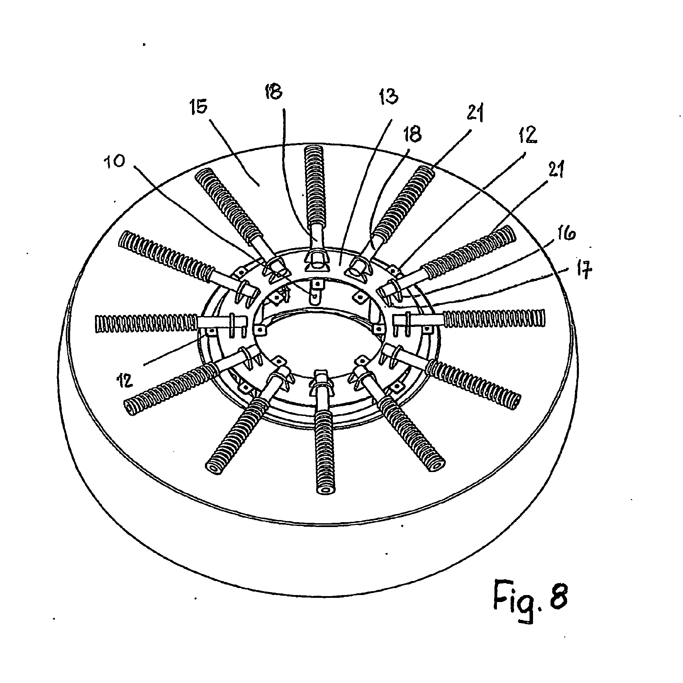

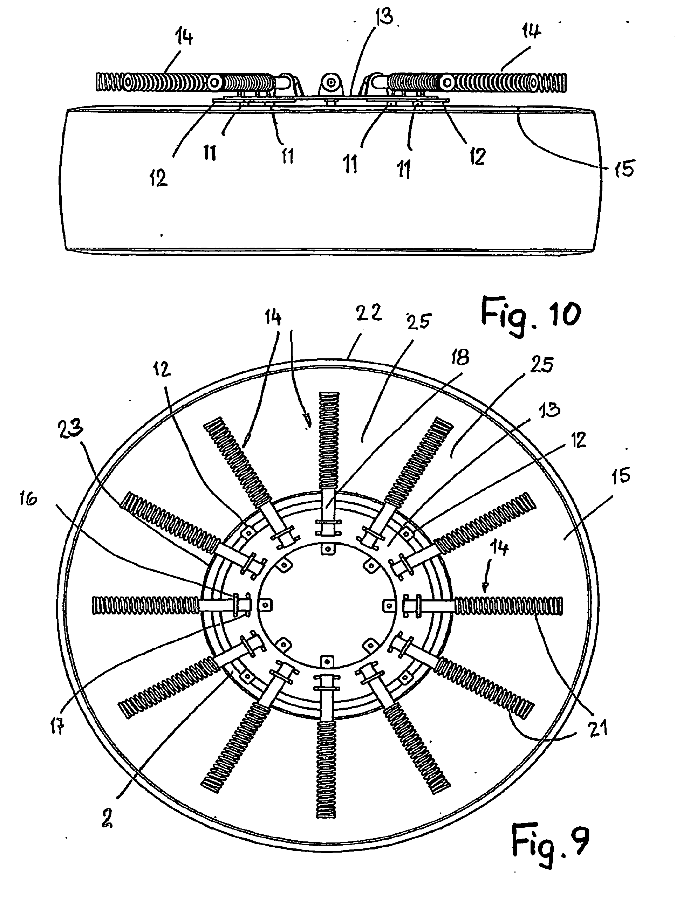

In montierter Lage liegt auf den Laschen 12 ein Ring 13 auf, mit dem Schutzelemente 14 der Schutzvorrichtung verbunden sind. Über den Ring 13 werden die Schutzelemente 14 mit dem Kupplungsstück 1 verbunden. Der Ring 13 ist als flache Ringscheibe ausgebildet, die mit ihrer Unterseite flächig auf den schmalen Laschen 12 aufliegt. In der Einbaulage liegen die Laschen 12 etwa radial zum Kupplungsstück 1 und stehen radial nach außen und innen über den Ring 13 vor (Fig. 8). Da der Ring 13 als flache Ringscheibe ausgebildet ist, steht er in der Einbaulage der Schutzvorrichtung nur wenig über den Reifen 3 vor (Fig. 10). Darüber hinaus sind die Steckteile 11 so in die Hülsen 10 eingesetzt, dass auch die Laschen 12 nur geringen Abstand von der Reifenflanke 15 haben (Fig. 10).

Auf der von den Laschen 12 abgewandten Seite des Ringes 13 sind aufrecht stehende Haltelaschen 16, 17 befestigt, vorzugsweise angeschweißt, mit denen die Schutzelemente 14 auf dem Ring 13 befestigt werden. Die Haltelaschen 16, 17 stehen hochkant auf dem Ring 13. Die näher dem äußeren Rand des Ringes 13 liegenden Haltelaschen 16 werden von einer Achse 18 der Schutzelemente 14 durchsetzt. Das freie Ende der Achsen 18 ist in einer stirnseitigen Vertiefung der radial innen liegenden Haltelaschen 17 befestigt. Die Haltelaschen 16, 17 haben jeweils Abstand vom äußeren bzw. inneren Rand des Ringes 13. Wie sich aus Fig. 9 ergibt, enden die Achsen 18 der Schutzelemente 14 mit geringem Abstand vom inneren Rand des Ringes 13. Da die beiden Haltelaschen 16, 17 mit Abstand radial hintereinander liegen, werden die Achsen 18 zuverlässig abgestützt. Da die Achsen 18 nicht in die vom Ring 13 umschlossene Öffnung 20 ragen, ist der Innenraum der Felge 2 auch bei montierter Schutzvorrichtung zugänglich. So ist es beispielsweise möglich, bei montierter Schutzvorrichtung das Kupplungsstück 1 nachzustellen, um eine sichere Anlage der Kupplungsteile 4 an der Innenwand der Felge 2 zu erreichen. Der Ring 13 deckt in montierter Lage die Hülsen 10 ab.

Die Achsen 18 stehen radial nach außen über den Ring 13 vor und tragen Schraubenringfedern 21. Die Achsen 18 ragen nur so weit in diese Federn 21, dass sie zuverlässig fest auf ihnen befestigt werden können. Wie sich aus Fig. 1 ergibt, liegt das freie Ende 22 der Achsen 18 mit nur geringem Abstand vom radial inneren Ende der jeweiligen Feder 21. Der Überstand der Federn 21 über die Achse 18 entspricht beispielsweise etwa vier Fünftel der Länge der Feder 21. Dies hat den Vorteil, dass der über die Achse 18 vorstehende Teil der Feder 21 sehr flexibel ist. Die Federn 21 sind selbstverständlich so steif ausgebildet, dass sie ihre gestreckte Lage (Fig. 9) an der Reifenflanke 15 auch während der Fahrt beibehalten und sich nicht unkontrolliert hin- und herbewegen.

Die Federn 21 sind so angeordnet, dass sie geringen Abstand vom Ring 13 haben (Fig. 10), so dass sie im Einsatz nicht ständig am Ring 13 reiben. Damit ein optimaler Flankenschutz gewährleistet ist, erstrecken sich die Federn 21 bis nahe an die Reifenlauffläche 22, in Achsansicht des Reifens gesehen. Die Federn 21 erstrecken sich vorteilhaft vom radial äußeren Rand 23 der Felge 2. Somit wird durch die Schutzelemente 14 die Reifenflanke 15 des Reifens 3 optimal geschützt.

Um eine Gefährdung bei der Montage der Schutzvorrichtung durch die Federn 21 zu vermeiden, ist auf die freien Federenden vorteilhaft eine Schutzscheibe 24 aufgebracht, die die scharfen Enden der Federn 21 abdeckt. Diese Schutzscheiben 24 können angeschweißt sein. Vorteilhaft ist es, wenn die Schutzscheiben 24 über ein (nicht dargestelltes) Spannelement, beispielsweise einen Spanndraht, mit einer in oder an der Achse 18 vorgesehenen Spanneinrichtung verbunden sind. Eine solche Spanneinrichtung kann beispielsweise eine drehbare Achse sein, auf die ein Ende des Spannteiles aufgewickelt wird. Dadurch besteht die Möglichkeit, durch Aufwickeln des Spannteiles auf eine solche Achse über die Schutzscheibe 24 die jeweilige Feder 21 in ihrer Längsrichtung zu stabilisieren. Dadurch besteht die Möglichkeit, jede Feder einzeln im Hinblick auf eine gewünschte Formstabilisierung einzustellen. Für den Benutzer ist somit die Möglichkeit gegeben, an Ort und Stelle die einzelnen Federn 21 der Schutzvorrichtung optimal auf den Anwendungsfall einzustellen.

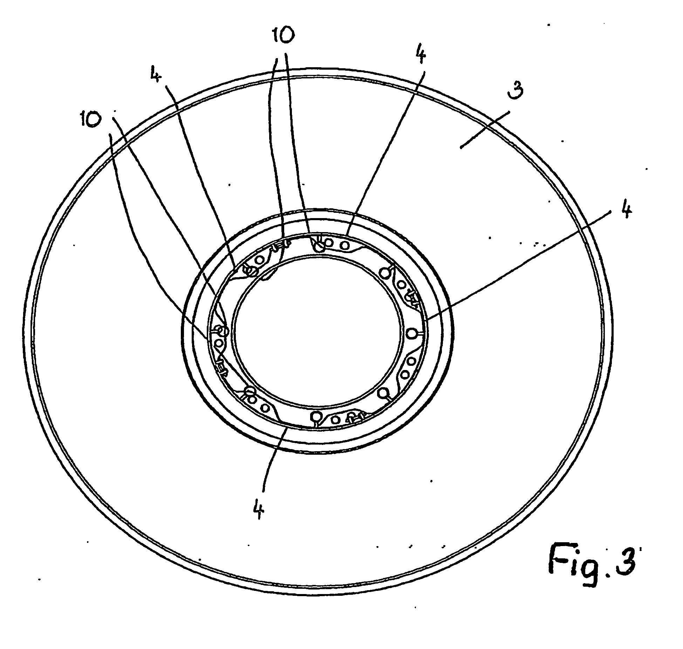

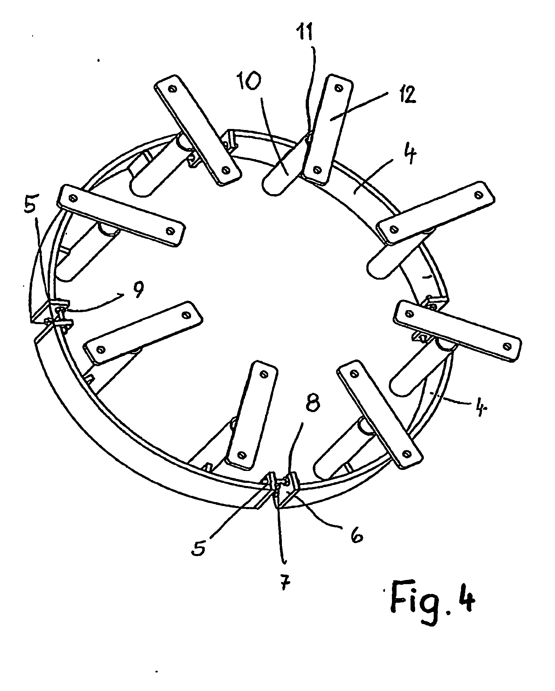

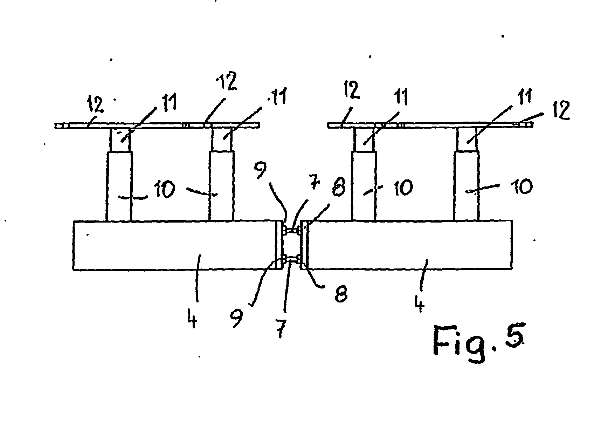

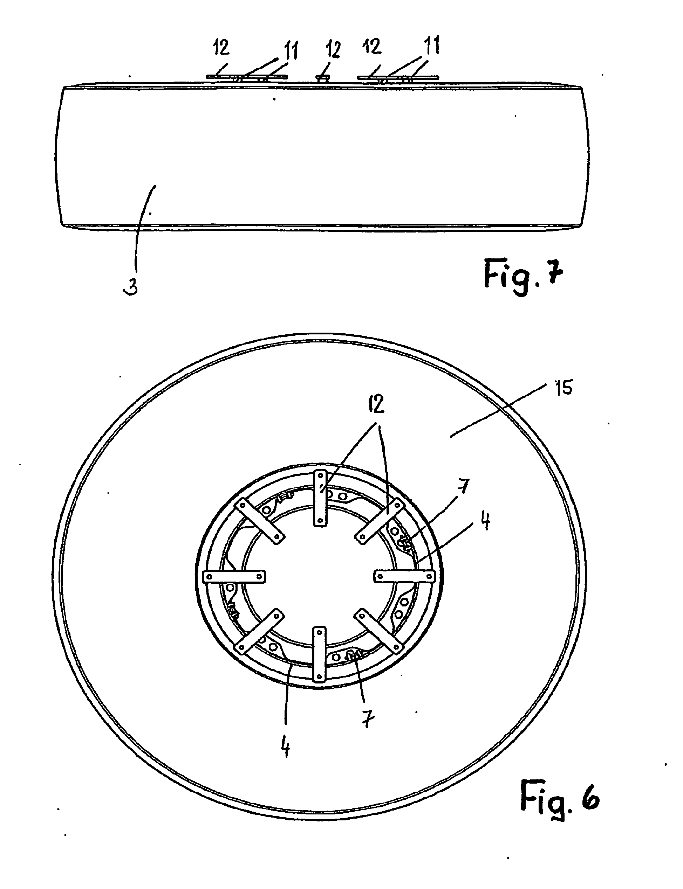

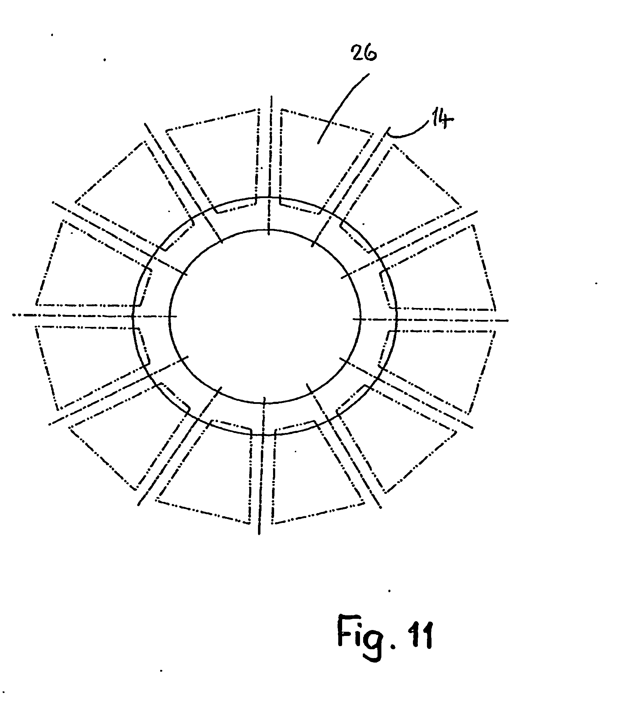

Bei der Schutzvorrichtung gemäß den Fig. 1 bis 10 haben die Federn 21 in Umfangsrichtung einen solchen Abstand voneinander, dass zwischen ihnen Zwischenräume 25 gebildet sind. Damit die Reifenflanke 15 in diesen Zwischenräumen 25 nicht beschädigt wird, sind die Zwischenräume 25, wie sich aus Fig. 11 ergibt, durch Zwischenelemente 26 zumindest weitgehend abgedeckt. In Fig. 11 sind die Schutzelemente 14 durch strichpunktierte Linie dargestellt. Auch die Zwischenelemente 26 sind nur schematisch angegeben. Die Schutzvorrichtung weist vorteilhaft gleichartige Zwischenelemente 26 auf. Grundsätzlich ist es aber auch möglich, in den Zwischenräumen 25 unterschiedlich gestaltete Zwischenelemente 26 anzuordnen.

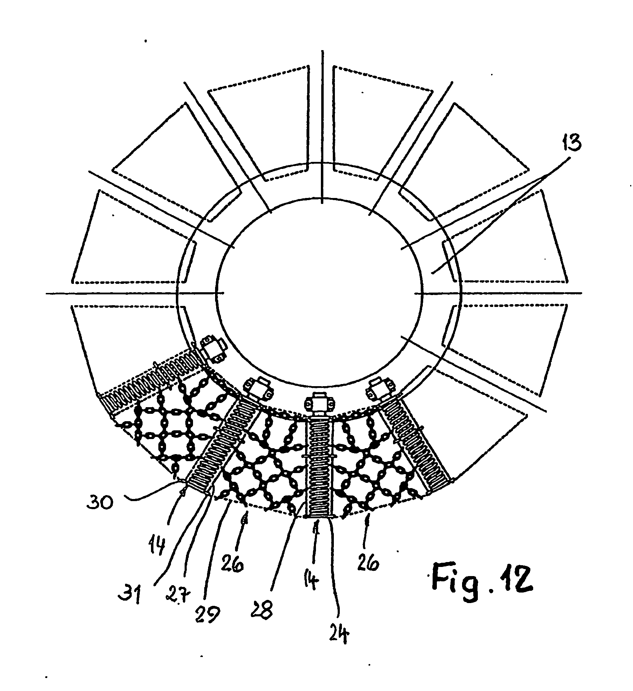

Anhand der Fig. 12 bis 20 werden verschiedene Ausführungsformen von Zwischenelementen 26 näher beschrieben.

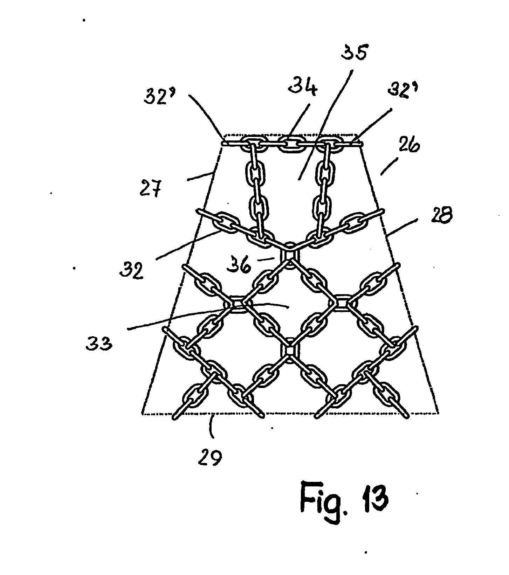

Bei der Ausführungsform gemäß den Fig. 12 und 13 werden die Zwischenelemente 26 durch kleine Kettennetze gebildet. Um sie mit den Schutzelementen 14 verbinden zu können, sind neben den Schutzelementen 14 Anschlussteile 27, 28 vorgesehen, die im Wesentlichen parallel zu den Schutzelementen 14, insbesondere zu den Federn 21, verlaufen. Diese Anschlussteile 27, 28 sind vorteilhaft durch Drähte gebildet, die sich etwa über die Länge der Federn 21 erstrecken und mit ihrem radial inneren Ende an der Achse 18 befestigt sind. In die Anschlussteile 27, 28 sind Kettenglieder der Kettennetze 26 eingehängt. Vorteilhaft sind die Anschlussteile 27, 28 einstückig miteinander ausgebildet. Die Anschlussteile 27, 28 gehen am äußeren Ende ineinander über, wodurch ein radial äußerer, in Umfangsrichtung verlaufender Anschlussteil 29 gebildet wird, in den ebenfalls Kettenglieder des Kettennetzes 26 eingehängt sind. An den Schutzscheiben 24 sind diametral einander gegenüberliegend ringförmige Ösen 30, 31 angeschweißt, durch welche der die Anschlussteile 27 bis 29 bildende Draht geführt wird. In den Ösen 30, 31 erfolgt die jeweilige Umlenkung des Drahtes.

Die Ausbildung des Kettennetzes 26 ergibt sich aus Fig. 13. Danach besteht dieses Kettennetz aus ineinandergreifenden ovalen Kettengliedern 32, die im mittleren Bereich rechteckige Kettenmaschen 33 bilden. Die Seiten der Kettenmaschen 33 werden durch jeweils drei Kettenglieder 32 gebildet.

An den Kreuzungspunkten benachbarter Kettenmaschen 33 befindliche Kettenglieder 32 sind liegend angeordnet, während die in die Anschlussteile 27 bis 29 eingehängten Kettenglieder 32 stehend auf der Reifenflanke 15 angeordnet sind. Radial innen wird das Kettennetz 26 durch einen Kettenstrang 34 begrenzt, der ebenfalls aus ineinandergreifenden ovalen Kettengliedern 32 gebildet ist. Die endseitigen Kettenglieder 32' dieses Kettenstranges 34 können in die Anschlussteile 27, 28 eingehängt sein. Es ist aber auch möglich, an den Achsen 18 der Schutzelemente 14 Laschen anzubringen, in welche die endseitigen Kettenglieder 32' eingehängt sind. Ein Teil des Kettenstranges 34 begrenzt eine Kettenmasche 35, die größer ist als die Kettenmaschen 33 des übrigen Kettennetzes 26. Im Ausführungsbeispiel nach Fig. 12 und 13 wird die größere Kettenmasche 35 an zwei einander gegenüberliegenden Längsseiten durch jeweils fünf Kettenglieder 32 begrenzt. Das Kettennetz ist somit im radial äußeren Bereich engmaschiger als im inneren Bereich, da im Einsatz in der Regel der innen liegende Bereich der Reifenflanke 15 weniger gefährdet ist als der radial äußere Bereich.

Aufgrund der beschriebenen beispielhaften Gestaltung hat das Kettennetz 26 über den größten Teil der radialen Breite der Reifenflanke 15 kleine Kettenmaschen 33. Dadurch besteht nicht die Gefahr, dass Steine oder dergleichen beim Überfahren die Reifenflanken 15 beschädigen. Aber auch nahe dem radial innen liegenden, die größeren Kettenmaschen 35 aufweisenden Bereich sind die Maschenöffnungen noch so klein, dass dieser Bereich der Reifenflanke 15 ausreichend vor Beschädigung geschützt ist.

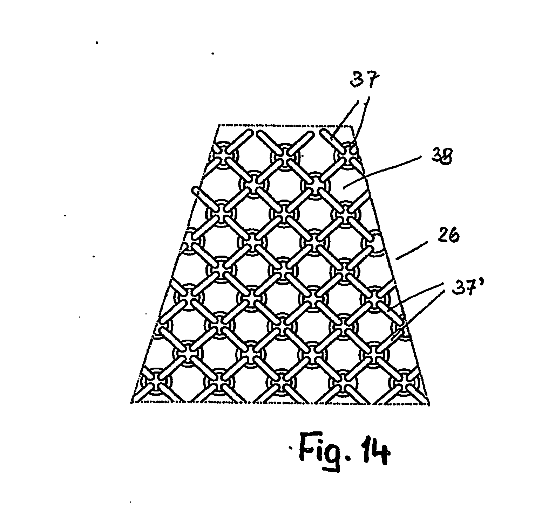

Fig. 14 zeigt, dass das Kettennetz 26 auch aus ineinandergreifenden kreisförmigen Kettengliedern 37 gebildet sein kann. Sie sind so angeordnet, dass sich rechteckige Kettenmaschen 38 ergeben, deren Maschenseiten von jeweils einem Ringglied 37 gebildet werden. Bei dieser Ausführungsform hat das Kettennetz 26 durchgehend gleiche Kettenmaschen 38. Da sie sehr klein sind, ergibt sich ein sehr engmaschiges Kettennetz, das die Reifenflanke 15 optimal schützt, selbst gegen kleinere Gegenstände. Die stehend am Reifen angeordneten Kettenglieder 37' können zumindest teilweise durch Stegglieder gebildet werden.

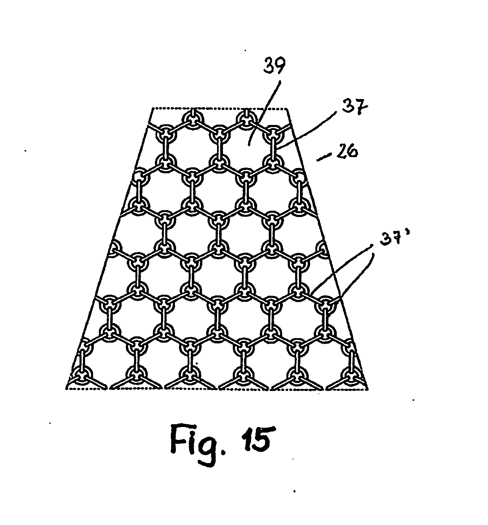

Beim Ausführungsbeispiel nach Fig. 15 hat das Kettennetz 26 sechseckförmige Kettenmaschen 39, deren Maschenseiten durch jeweils ein Kettenglied 37 gebildet werden. Wie beim Ausführungsbeispiel nach Fig. 14 werden für das Kettennetz 26 jeweils gleich große Kreisringglieder 37 verwendet. Auch dieses Kettennetz 26 hat enge Maschen, die die Reifenflanke 15 optimal vor Beschädigung schützen. Wie beim vorigen Ausführungsbeispiel hat das Kettennetz 26 im Wesentlichen gleich große Kettenmaschen 39. Auch bei dieser Ausführungsform können die stehend am Reifen angeordneten Kettenglieder 37' zumindest teilweise durch Stegglieder gebildet sein.

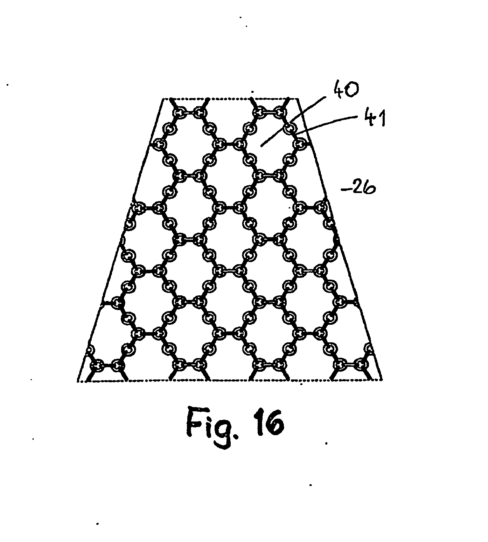

Das Kettennetz 26 gemäß Fig. 16 hat ebenfalls sechseckige Kettenmaschen 40, die allerdings größer sind als die Kettenmaschen 39 gemäß Fig. 15. Vier der die Kettenmaschen 40 begrenzenden Seiten werden durch drei Ringglieder 41 begrenzt, während zwei einander gegenüberliegende Maschenseiten durch nur ein Kettenglied begrenzt sind. Da das Kettennetz 26 im Wesentlichen gleich große Kettenmaschen 40 aufweist, ergibt sich wie bei den Ausführungsformen gemäß den Fig. 14 und 15 ein gleichmäßiger Schutz der Reifenflanke 15. Die Kettenmaschen 40 sind noch ausreichend klein, um einen guten Schutz der Reifenflanke 15 zu gewährleisten.

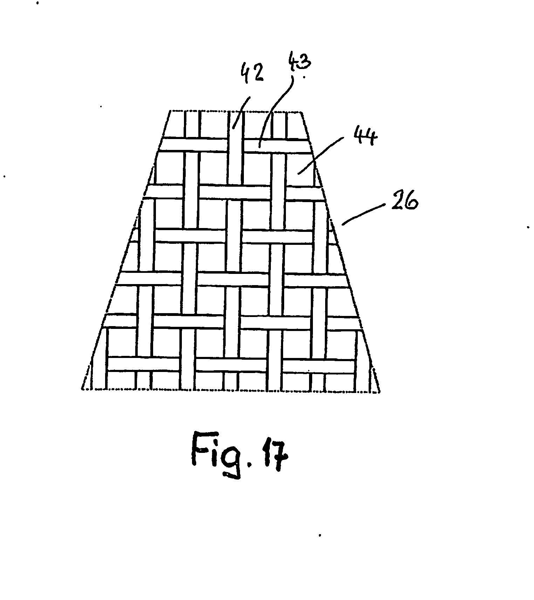

Fig. 17 zeigt eine Ausführungsform eines Zwischenelementes 26, das nicht aus Kettengliedern, sondern durch eine Art Gewebe gebildet ist. Es besteht aus einander kreuzenden, breiten Bändern 42, 43, die aus einem verschleißfesten Material bestehen. Die Bänder 42, 43 bilden rechteckförmige Maschen 44, die gleichmäßig verteilt im Zwischenelement 26 angeordnet sind. Das Zwischenelement 26 lässt sich problemlos an den Anschlussteilen 27 bis 29 befestigen.

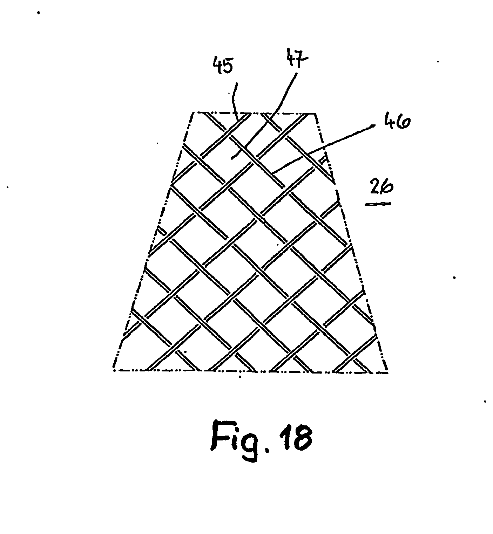

Auch das Zwischenelement 26 gemäß Fig. 18 ist als Gewebe ausgebildet, das einander kreuzende, im Unterschied zur vorigen Ausführungsform jedoch schmale Bänder 45, 46 aufweist, die rechteckförmige Maschen 47 bilden. Die Maschenöffnungen sind größer als bei der vorigen Ausführungsform, aber dennoch so klein, dass sie einen zuverlässigen Schutz der Reifenflanken 15 ermöglichen. Die Maschen 47 sind wie die Maschen 33 (Fig. 13) und 38 (Fig. 14) so angeordnet, dass die eine Diagonale der Maschenöffnungen radial in Bezug auf den Reifen 3 verläuft.

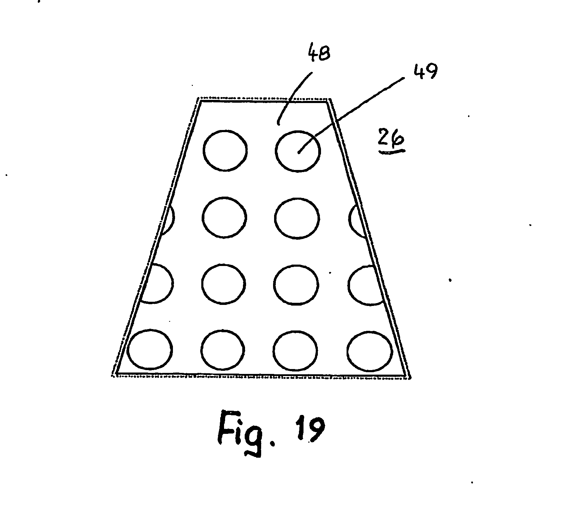

Fig. 19 zeigt ein Zwischenelement 26, das durch ein Gewebe 48 gebildet wird, das mit verteilt angeordneten, vorteilhaft gleich großen Öffnungen 49 versehen ist. Sie haben beispielsweise kreisförmigen Umriss. Das Gewebe 48 lässt sich entsprechend den vorigen Ausführungsbeispielen problemlos an den Anschlussteilen 27 bis 29 befestigen. Das Gewebe 48 ist flexibel ausgebildet, so dass es den Bewegungen der Federn 21 im Einsatz der Schutzvorrichtung folgen kann.

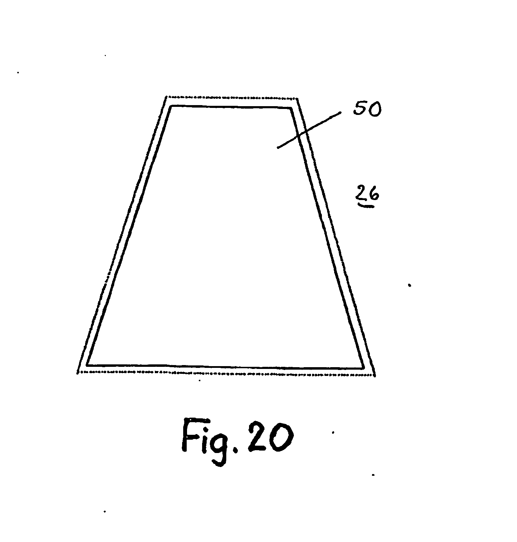

Fig. 20 zeigt schließlich ein Zwischenelement 26, das aus einem geschlossenen Gewebe 50 besteht. Es ist wie bei den vorigen Ausführungsbeispielen in seiner Umrissform an die Umrissform des Zwischenraumes 25 zwischen benachbarten Schutzelementen 14 angepasst. Das Gewebe 50 ist längs seiner Ränder mit den Anschlussteilen 27 bis 29 verbunden. Entsprechend den vorigen Ausführungsbeispielen ist auch das Gewebe 50 ausreichend flexibel, um den Bewegungen der Federn 21 im Einsatz der Schutzvorrichtung folgen zu können.

Die montierte Schutzvorrichtung deckt die Reifenflanke 15 nahezu vollständig ab. Dadurch ist ein hoher Schutz gegen Beschädigung und/oder gegen Schnittverletzungen durch Gegenstände im Untergrund gegeben. Insbesondere wenn mit solchen Schutzvorrichtungen bestückte Reifen eines Fahrzeuges über Geröll, Steine, Schrott, Schlacke oder dergleichen fahren, besteht diese Gefahr. Da die Schutzvorrichtung die Reifenflanken jedoch abdeckt, ist diese Gefahr einer Beschädigung bzw. einer Verletzung des Reifens nur noch gering. Die Schutzvorrichtung zeichnet sich insbesondere dadurch aus, dass sie flexibel ist und den Reifenverformungen in jeder Richtung folgen kann. Die Federn 21 können nicht nur in Umfangsrichtung der Reifenflanke elastisch gebogen, sondern auch quer zur Reifenflanke 15 weggebogen werden. Es besteht sogar die Möglichkeit, dass die Federn 21 bei entsprechender Belastung zusammengedrückt werden. Die zwischen den Federn 21 befindlichen Zwischenelemente 26 können infolge ihrer Flexibilität diesen Bewegungen folgen, so dass nicht die Gefahr besteht, dass die Zwischenelemente 26 durch solche Bewegungen der Federn 21 beschädigt werden. Die Federn 21 und damit auch die Zwischenelemente 26 kehren bei Entlastung wieder in ihre Ausgangslage zurück. Sollten Gegenstände zwischen die Schutzvorrichtung und die Reifenflanke 15 gelangen, werden diese infolge der Flexibilität schon nach kurzem Fahrweg wieder nach außen bewegt, so dass die Belastung der Reifenflanke nur gering ist. Dass solche Gegenstände zwischen Reifenflanke 15 und Schutzvorrichtung rasch wieder nach außen gelangen, wird durch die offene Struktur der Zwischenelemente 26 begünstigt. Kleinere Gegenstände gelangen durch die Maschen bzw. Öffnungen in den Zwischenelementen 26 schon nach kurzem Fahrweg problemlos nach außen, während größere Gegenstände aufgrund der beschriebenen Flexibilität der Schutzvorrichtung ebenfalls nach kurzem Fahrweg nach außen gelangen.

Da die Schutzvorrichtung in nur geringem Abstand von der Reifenflanke angeordnet werden kann (Fig. 10), ist ohnehin die Gefahr gering, dass Gegenstände zwischen die Reifenflanke 15 und die Schutzvorrichtung gelangen.

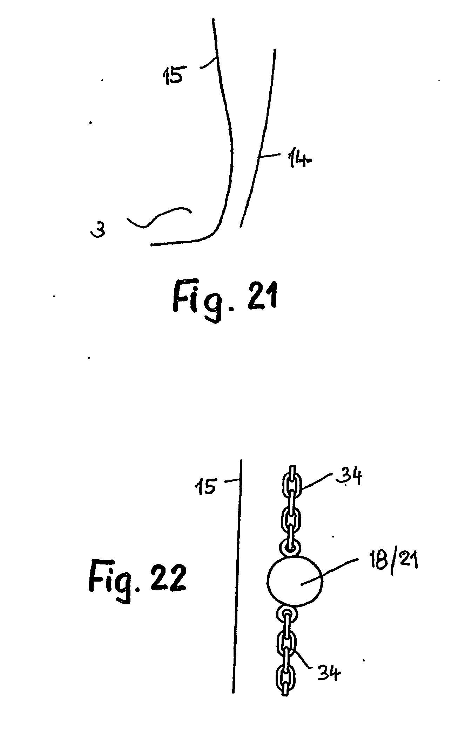

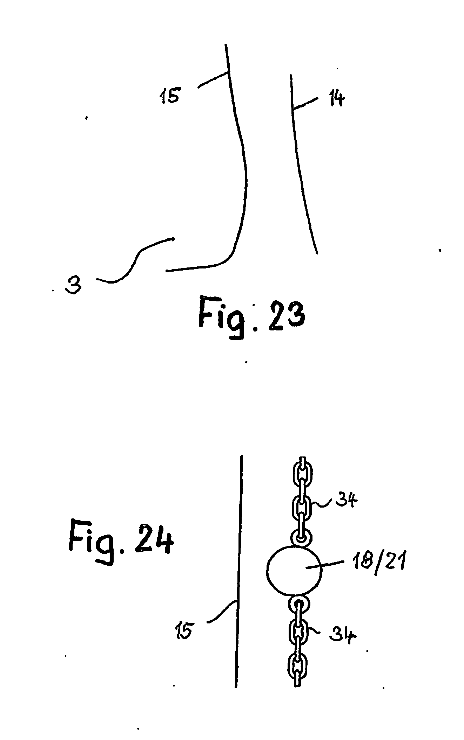

Bei den beschriebenen Ausführungsbeispielen liegen die Schutzelemente 14 bzw. die Federn 21 im Wesentlichen parallel zur Reifenflanke 15 (Fig. 10). Es ist aber auch möglich, dass die Schutzelemente 14, wie in Fig. 21 bzw. 23 schematisch dargestellt ist, einen Winkel mit der Reifenflanke 15 des Reifens 3 bilden. Dabei kann entsprechend Fig. 21 der Abstand zwischen dem Reifen 3 und den Schutzelementen 14 radial nach außen abnehmen oder, wie Fig. 23 zeigt, zunehmen. Dies wird, wie dies für ein Kettennetz als Zwischenelement 26 dargestellt ist, dadurch erreicht, dass die radial innen liegenden Kettenstränge 34 der Zwischenelemente 26 nicht diagonal einander gegenüberliegend an den Achsen 18 der Schutzelemente 14 befestigt sind, sondern außermittig. Beim Ausführungsbeispiel nach den Fig. 21 und 22 erfolgt der Anschluss der Kettenstränge 34 an die Achsen 18 axial in Richtung auf die Reifenflanke 15 versetzt. Dies hat zur Folge, dass beim Spannen der Kettenstränge 34 die Federn 21 in Richtung auf die Reifenflanke 15 gebogen werden.

Bei der Ausführungsform nach den Fig. 23 und 24 sind die Kettenstränge 34 hingegen, bezogen auf die Reifenflanke 15, nach außen versetzt an den Achsen 18 der Federn 21 befestigt. Beim Spannen der Kettenstränge 34 werden die Federn 21 dadurch von der Reifenflanke 15 weggebogen.

Auf diese Weise kann die Schutzvorrichtung optimal an den jeweiligen Reifen 3 angepasst werden, nicht nur hinsichtlich dessen Formgebung, sondern auch unter Berücksichtigung des jeweiligen Untergrundes, über den das Fahrzeug fahren muss.

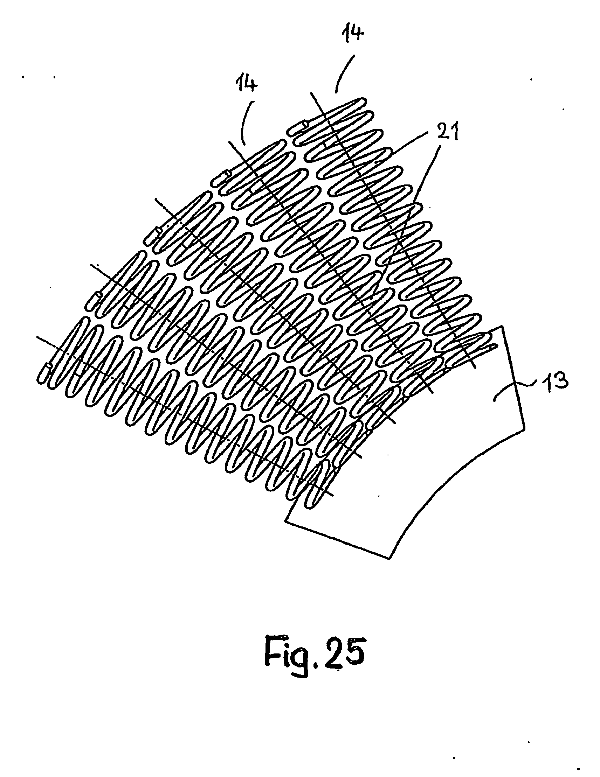

Fig. 25 zeigt eine Ausführungsform einer Schutzvochtung, bei der die Schutzelemente 14 so dicht nebeneinander vorgesehen sind, dass zwischen ihnen praktisch keine Zwischenräume mehr bestehen, die durch Zwischenelemente abgedeckt werden müssten. Die Schutzelemente 14 bestehen ausschließlich aus den Schraubenringfedern 21, die unmittelbar am Ring 13 befestigt sind. Damit die Federn 21 möglichst eng nebeneinander längs des Umfanges des Ringes 13 befestigt werden können, haben die Federn 21 konische Form. Sie haben am Ring 13 den kleinsten Durchmesser, der in Richtung auf ihr radial äußeres Ende stetig zunimmt. Durch diese Gestaltung der Federn 21 ist es möglich, die Abstände zwischen ihnen minimal zu halten, insbesondere über die radiale Länge annähernd gleich vorzusehen. Die Federn 21 haben im Hinblick auf ihre Funktion eine ausreichende Steifigkeit, so dass sie in der Ruhelage die in Fig. 25 dargestellte Lage einnehmen. Auch während der Fahrt bleiben die Federn 21 in dieser Ausgangslage. Erst wenn die Federn 21 auf entsprechenden Untergrund bzw. auf Gegenstände des Untergrundes treffen, werden sie elastisch gebogen. Sollten Gegenstände zwischen die Federn 21 und die Reifenflanke 15 gelangen, werden sie nach kurzem Fahrweg wieder nach außen gefördert, so dass eine Beschädigung der Reifenflanke 15 verhindert wird. Die Federn 21 sind, wie auch bei der vorhergehenden Ausführungsform, so gewickelt, dass selbst kleinere Gegenstände nicht von außen durch die Windungen der Federn 21 hindurch zur Reifenflanke 15 gelangen können.

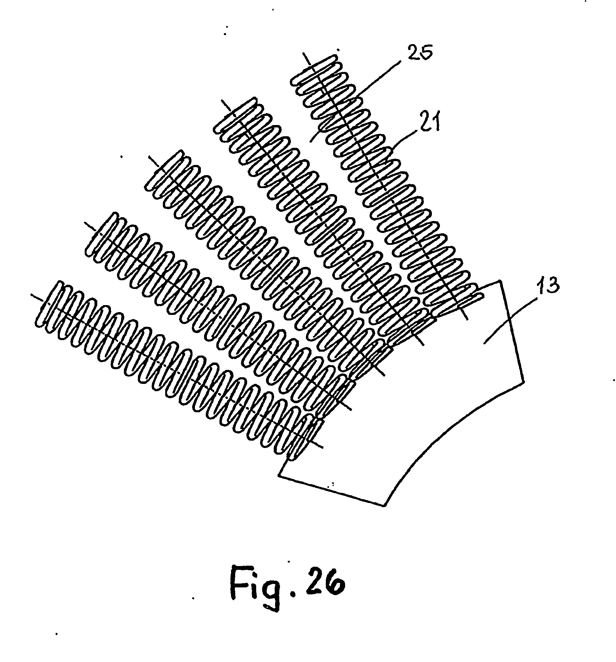

Beim Ausführungsbeispiel nach Fig. 26 haben die Federn 21 über ihre Länge konstanten Durchmesser. Wie bei der Ausführungsform nach Fig. 25 sind die Federn 21 unmittelbar am Ring 13 befestigt. Da die Federn 21 konstanten Durchmesser haben, werden zwischen benachbarten Federn 21 V-förmige, jedoch kleine Zwischenräume 25 gebildet, deren Breite radial nach außen stetig zunimmt. Diese Zwischenräume 25 sind allerdings so klein, dass sie nicht durch Zwischenelemente abgedeckt werden müssen. Auch bei dieser Ausführungsform sind die Federn 21 so dicht gewickelt, dass selbst kleinere Gegenstände von außen nicht bis zur Reifenflanke durchdringen können.

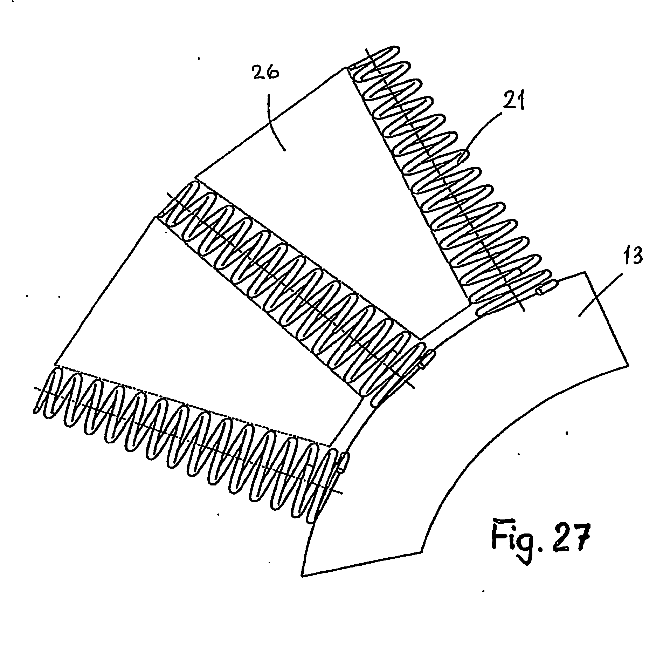

Fig. 27 zeigt ein weiteres Ausführungsbeispiel, bei dem die Schutzelemente 14 ausschließlich aus den Schraubendruckfedern 21 gebildet sind, die unmittelbar am Ring 13 befestigt sind. Die Federn 21 sind wiederum kegelförmig ausgebildet, wobei sie jedoch im Unterschied zur Ausführungsform nach Fig. 25 am Ring 13 ihren größten und am freien Ende ihren kleinsten Durchmesser haben. Die Federn 21 sind in einem etwas größeren Abstand voneinander am Ring 13 befestigt, so dass die zwischen ihnen gebildeten Zwischenräume durch die Zwischenelemente 26 abgedeckt werden, die entsprechend einer der beschriebenen Ausführungsformen ausgebildet sein können.

Bei den beschriebenen Ausführungsformen haben die Schutzelemente 14 sowie die Zwischenelemente 26 im Normalfall Abstand von der Reifenflanke 13. Die Federn 21 und die Zwischenelemente 26 werden erst im kritischen Fall elastisch verformt. Somit wird eine lange Lebensdauer der Schutzvorrichtung gewährleistet.

Die Schutzvorrichtung lässt sich problemlos an den jeweils zu schützenden Reifen 3 anpassen. Aufgrund der hohen Flexibilität der Schutzelemente 14 und der Zwischenelemente 26 können unterschiedliche Reifenbelastungen ausgeglichen werden, die beispielsweise durch unterschiedlichen Reifendruck, unterschiedlichen Belastungszustand des Fahrzeuges, durch Temperaturunterschiede und dergleichen entstehen. Auch kann die Schutzvorrichtung ohne Weiteres an den Reifendurchmesser und damit an die radiale Breite der Reifenflanke 15 angepasst werden.

Da die Schutzvorrichtung die zentrale Öffnung 20 aufweist, bleibt der Achsnabenbereich des Rades beispielsweise für die Wartung zugänglich. So können an solchen Fahrzeugen auch bei montierter Schutzvorrichtung die Ölstandskontrollschrauben problemlos erreicht werden.

Bei den beschriebenen Ausführungsbeispielen wird das ringförmige Kupplungsstück 1 an der Innenwand der Felge 2 geklemmt. Es ist selbstverständlich möglich, das Kupplungsstück 1 mit der Innenwand der Felge zu verschrauben. Hierfür können entsprechende Laschen oder Adaptionen für Radschrauben, Muttern und dergleichen vorgesehen sein.

Die Federn 21 sind bei den beschriebenen Ausführungsbeispielen gleichmäßig gewickelt. Selbstverständlich können die Federn 21 über ihre Länge auch unterschiedliche Steigungen haben, d.h. unregelmäßig gewickelt sein.

Die Federn 21 und die Zwischenelemente 26 lassen sich problemlos bei Beschädigung austauschen. Dies hat den Vorteil, dass nur einzelne Teile der Schutzvorrichtung im Bedarfsfall ausgewechselt werden müssen.

Die Schutzvorrichtung hat darüber hinaus verhältnismäßig geringes Gewicht, was sich besonders vorteilhaft im Einsatz auswirkt. Das geringe Gewicht führt auch nur zu entsprechend geringen Fliehkräften beim Fahren. Da mit solchen Schutzvorrichtungen ausgestattete Räder in der Regel Durchmesser von etwa 2 bis etwa 4 m haben, ist das geringe Gewicht von besonderem Vorteil. Selbstverständlich kann die Schutzvorrichtung aber auch für herkömmliche Reifendurchmesser, wie sie bei PKWs oder LKWs üblich sind, eingesetzt werden.

## Patentansprüche

1. Schutzvorrichtung für Flanken (15) von Reifen (3) von Fahrzeugen, mit mindestens einer zur Befestigung der Schutzvorrichtung am Rad vorgesehenen Halterung (1, 13) die eine Ringscheibe (13) und ein mit ihr verbundenes Kupplungsstück (1) aufweist, und mit Schutzelementen (14), die formstabile, unter Belastung elastisch verformbare Teile sind, die mit einem Ende auf der Ringscheibe (13) befestigt sind, sich von der Halterung (1, 13) aus etwa radial erstrecken und über ihre Länge Abstand von der Reifenflanke (15) aufweisen,
**dadurch gekennzeichnet, dass** die Ringscheibe (13) ein vom Kupplungsstück (1) getrennter flacher einstückiger Ring ist, der in einer etwa parallel zur Reifenflanke (15) sich erstreckenden Ebene liegt und in Achsrichtung des Reifens (3) gegenüber dem Kupplungsstück (1) verstellbar ist.

2. Schutzvorrichtung nach Anspruch 1,
**dadurch gekennzeichnet, dass** sich die Schutzelemente. (14) über die radiale Breite der Reifenflanke (15) erstrecken.

3. Schutzvorrichtung nach Anspruch 1 oder 2,
**dadurch gekennzeichnet, dass** der Ring (13) quer von ihm abstehende Steckteile (11) aufweist, die in Aufnahmen (10) einsetzbar sind.

4. Schutzvorrichtung nach Anspruch 3,
**dadurch gekennzeichnet, dass** die Aufnahmen (10) am Kupplungsstück (1) der Halterung (1, 13) vorgesehen sind, das als Ring mit einstellbarem Durchmesser ausgebildet ist.

5. Schutzvorrichtung nach Anspruch 4,
**dadurch gekennzeichnet, dass** der Ring aus wenigstens zwei teilkreisförmigen Ringteilen (4) besteht, die durch wenigstens eine Schraube (7) lösbar miteinander verbunden sind, mit der der Abstand zwischen den Ringteilen (4) einstellbar ist.

6. Schutzvorrichtung nach einem der Ansprüche 1 bis 5,
**dadurch gekennzeichnet, dass** das Kupplungsstück (1) als einteiliger Spannring ausgebildet ist, dessen Enden durch wenigstens ein Spannelement miteinander verbunden sind, mit dem der Spannring gegen die Innenseite der Felge (2) verspannbar ist.

7. Schutzvorrichtung nach einem der Ansprüche 1 bis 6,
**dadurch gekennzeichnet, dass** die Schutzvorrichtung in der Felge (2) des Rades befestigbar ist.

8. Schutzvorrichtung nach einem der Ansprüche 1 bis 7,
**dadurch gekennzeichnet, dass** die Schutzelemente (14) zumindest teilweise Schraubfedern sind, die mit dem Ring (13) der Halterung (1, 13) verbunden sind.

9. Schutzvorrichtung nach Anspruch 8,
**dadurch gekennzeichnet, dass** die Schraubfedern (14) mit dem Ring (13) der Halterung (1, 13) über wenigstens eine Achse (18) verbunden sind, die in ein Ende der Schraubfeder (14) eingreift und radial nach außen über den Ring (13) ragt.

10. Schutzvorrichtung nach Anspruch 9,
**dadurch gekennzeichnet, dass** die Schraubfeder (14) die Achse (18) über den größten Teil ihrer Länge überragt.

11. Schutzvorrichtung nach einem der Ansprüche 1 bis 10,
**dadurch gekennzeichnet, dass** zwischen benachbarten Schutzelementen (14) jeweils wenigstens ein Zwischenelement (26) angeordnet ist, das durch ein Kettennetz oder durch ein Gewebe gebildet ist.

## Claims

1. Protective device for flanks (15) of vehicle tyres (3) with at least one holder (1, 13) for attachment of the protective device on the wheel, comprising an annular disk (13) and a coupling member (1), attached to it, and with protective elements (14), that have constant given shape when not under load and are elastically deformable under load, that are attached with one end to the annular disk (13) and that extend approximately radially from the holder (1, 13) and have a distance from the tyre wall (15) over its length,
**characterised in that** the annular disk (13) is a flat ring, made in one piece and separated from the coupling member (1), and that is disposed within a plane approximately parallel to the tyre wall (15) and is adjustable in the axial direction of the tyre (3) in relation to the coupling member (1).

2. Protective device according to claim 1,
**characterised in that** the protective elements (14) extend across the radial width of the tyre wall (15).

3. Protective device according to claim 1 or 2,
**characterised in that** the ring (13) has insertion parts (11), projecting transversally away from the ring, and insertable into receptacles (10).

4. Protective device according to claim 3,
**characterised in that** the receptacles (10) are disposed on the coupling member (1) of the holder (1, 13), that is embodied as a ring with adjustable diameter.

5. Protective device according to claim 4,
**characterised in that** the ring is comprised of at least two ring parts (4) of part-circular shape that are releasable attached to one another by at least one screw (7), and that the spacing between the ring parts (4) is adjustable by this screw.

6. Protective device according to one of the claims 1 to 5,
**characterised in that** the coupling member (1) is a one-piece clamping ring, the ends of which are connected to one another by at least one clamping element with which the clamping ring can be clamped to the inner side of the wheel rim (2).

7. Protective device according to one of the claims 1 to 6,
**characterised in that** the protective device is attached to the rim (2) of the wheel.

8. Protective device according to one of the claims 1 to 7,
**characterised in that** the protective elements (14) are at least partially in form of coil springs, which are connected to the ring (13) of the holder (1, 13).

9. Protective device according to claim 8,
**characterised in that** the coil springs (14) are connected to the ring (13) of the holder (1, 13) by at least one axle (18), which engages one end of the coil spring (14) and projects radially outwardly across the ring (13).

10. Protective device according to claim 9,
**characterised in that** the coil spring (14) projects past the axle (18) with its major portion of said length.

11. Protective device according to one of the claims 1 to 10,
**characterised in that** between two of the protective elements (14) that neighbour one another respectively at least one intermediate element (26) is arranged which is a chain net or a fabric.

## Revendications

1. Dispositif de protection pour des flancs (15) de pneus (3) de véhicules avec au moins un support (1, 13), prévue pour la fixation du dispositif de protection à la roue, comprenant une rondelle annulaire (13) et une pièce d'accouplement (1), connectée avec lui, et avec des éléments de protection (14), qui sont des pièces de forme stable, déformables élastiquement sous charge, fixées par une extrémité sur la rondelle annulaire (13), s' entendent du support (1, 13) à peu près radialement et étant à distance du flanc de pneu (15) sur leur longueur,
**caractérisé en ce que** le disque annulaire (13) est une bague plate d'une seule pièce séparée de la pièce d'accouplement (1), positionnée dans un plan, s'étendant environ parallèlement au flanc de pneu (15) et ajustable en direction de l'axe du pneu (3) par rapport à la pièce d'accouplement (1).

2. Dispositif de protection selon revendication 1,
**caractérisé en ce que** les éléments de protection (14) s'étendent sur la largeur radiale du flanc de pneu (15).

3. Dispositif de protection selon revendication 1 ou 2,
**caractérisé en ce que** la bague (13) comprend des pièces enfichables (11) se projetant transversalement à partir d'elle-même, enfichables dans des réceptions (10).

4. Dispositif de protection selon revendication 3,
**caractérisé en ce que** les réceptions (10) sont prévues dans la pièce d'accouplement (1) du support (1, 13), laquelle est formée comme une bague à diamètre ajustable.

5. Dispositif de protection selon revendication 4,
**caractérisé en ce que** la bague se compose d'au moins deux pièces annulaires en forme de cercle, connectées de façon démontable l'une avec l'autre par au moins une vis (7), par laquelle la distance entre les parties de bague (4) est ajustable.

6. Dispositif de protection selon une des revendications 1 à 5,
**caractérisé en ce que** la pièce d'accouplement (1) est formée comme anneau de serrage mono corps, dont les extrémités sont connectées l'une à l'autre par au moins un élément de serrage, par lequel la bague de serrage peut être haubanée contre le côté intérieur de la jante (2).

7. Dispositif de protection selon une des revendications 1 à 6,
**caractérisé en ce que** le dispositif de protection est fixable dans la jante (2) de la roue.

8. Dispositif de protection selon une des revendications 1 à 7,
**caractérisé en ce que** les éléments de protection (14) sont au moins partiellement des ressorts hélicoïdaux, connectés avec la bague (13) du support (1, 13).

9. Dispositif de protection selon revendication 8,
**caractérisé en ce que** les ressorts hélicoïdaux (14) sont connectés avec la bague (13) du support (1, 13) par au moins un axe (18), qui engrène dans une extrémité du ressort hélicoïdal (14) et se projette radialement vers l'extérieur sur la bague (13).

10. Dispositif de protection selon revendication 9,
**caractérisé en ce que** le ressort hélicoïdal (14) fait saillie sur l'axe (18) sur la majeure partie de sa longueur.

11. Dispositif de protection selon une des revendications 1 à 10,
**caractérisé en ce que**, entre des éléments de protection (14) avoisinants est disposé respectivement au moins un élément intermédiaire (26), formé par un réseau de chaîne ou par un tissu.
